# EUROPEAN PATENT APPLICATION

(11) **EP 3 822 756 A1**
(43) Date of publication of application: **19.05.2021**
(21) Application number: 19834860.9
(22) Date of filing: 03.07.2019
(51) Int. Cl.: G06F 3/0481

(54) **NOTIFICATION MESSAGE DISPLAYING METHOD AND TERMINAL DEVICE**

(30) Priority: 13.07.2018 CN 201810770364
(71) Applicant: Vivo Mobile Communication Co., Ltd., Dongguan, Guangdong 523860 (CN)
(72) Inventor: ZHENG, Congcong, Dongguan, Guangdong 523860 (CN)
(74) Representative: Lavoix
(86) International application number: PCT/CN2019/094490
(87) International publication number: WO 2020/011077

(57) **Abstract**

Provided are a notification message displaying method and a terminal device. The method comprises: receiving a sliding input of a user in a first area of a current display interface; in response to the sliding input, displaying N notification messages in a second area of the current display interface, where the second area is an area from which the shortest distance to the first area is less than a preset threshold, and N is a positive integer.

## Description

### CROSS-REFERENCE TO RELATED APPLICATIONS

This application claims priority to Chinese Patent Application No. 201810770364.6 filed in China on July 13, 2018, which is incorporated herein by reference in its entirety.

### TECHNICAL FIELD

This disclosure relates to the field of communications technologies, and in particular, to a method for displaying a notification message and a terminal device.

### BACKGROUND

With the rapid development of terminal devices, the terminal devices have become an indispensable tool for users to obtain information. A terminal device receives a large amount of information every day. When the terminal device receives information, unread information is usually displayed in the status bar. If the user needs to view unread information, the user may perform a pull-down operation from the top of the screen in any interface, to expand the information in the status bar. However, it is difficult for the user to view the information in the status bar when the user operates the terminal device with one hand.

### SUMMARY

Embodiments of this disclosure provide a method for displaying a notification message and a terminal device, to solve the problem that it is difficult for a user to view information in the status bar when the user operates the terminal device with one hand.

According to a first aspect, an embodiment of this disclosure provides a method for displaying a notification message, including:
receiving a sliding input by a user in a first area of a current display interface; and
displaying N notification messages in a second area of the current display interface in response to the sliding input;
where the second area is an area with the shortest distance to the first area being less than a preset threshold, and N is a positive integer.

According to a second aspect, an embodiment of this disclosure further provides a terminal device, including:
a receiving module, configured to receive a sliding input by a user in a first area of a current display interface; and
a display module, configured to display N notification messages in a second area of the current display interface in response to the sliding input;
where the second area is an area with the shortest distance to the first area being less than a preset threshold, and N is a positive integer.

According to a third aspect, an embodiment of this disclosure further provides a terminal device, including: a memory, a processor, and a computer program stored in the memory and capable of running on the processor. When the computer program is executed by the processor, the steps of the foregoing method for displaying a notification message are implemented.

According to a fourth aspect, an embodiment of this disclosure further provides a readable storage medium, where the computer-readable storage medium stores a computer program. When the computer program is executed by a processor, the steps of the foregoing method for displaying a notification message are implemented.

In the embodiments of this disclosure, the sliding input by the user in the first area of the current display interface is received; and the N notification messages are displayed in the second area of the current display interface in response to the sliding input; where the second area is an area with the shortest distance to the first area being less than the preset threshold, and N is a positive integer. In this way, when the user operates the terminal device with one hand, the user can operate in an area that is convenient for finger operation, to trigger the terminal device to display the notification message, which is convenient for the user to call up display of the notification message and perform subsequent operations on the notification message with one hand.

### BRIEF DESCRIPTION OF DRAWINGS

FIG. 1 is a first flowchart of a method for displaying a notification message according to an embodiment of this disclosure;
FIG. 2 is a second flowchart of a method for displaying a notification message according to an embodiment of this disclosure;
FIG. 3 is a schematic diagram of areas of a terminal device interface according to an embodiment of this disclosure;
FIG. 4-1 is a first schematic diagram of display of notification messages of a terminal device according to an embodiment of this disclosure;
FIG. 4-2 is a second schematic diagram of display of notification messages of a terminal device according to an embodiment of this disclosure;
FIG. 5 is a third flowchart of a method for displaying a notification message according to an embodiment of this disclosure;
FIG. 6 is a fourth flowchart of a method for displaying a notification message according to an embodiment of this disclosure;
FIG. 7 is a fifth flowchart of a method for displaying a notification message according to an embodiment of this disclosure;
FIG. 8-1 is a first schematic diagram of sliding trajectories of a terminal device according to an embodiment of this disclosure;
FIG. 8-2 is a second schematic diagram of sliding trajectories of a terminal device according to an embodiment of this disclosure;
FIG. 9 is a first structural diagram of a terminal device according to an embodiment of this disclosure;
FIG. 10 is a first structural diagram of a display module in a terminal device according to an embodiment of this disclosure;
FIG. 11 is a second structural diagram of a display module in a terminal device according to an embodiment of this disclosure;
FIG. 12 is a third structural diagram of a display module in a terminal device according to an embodiment of this disclosure; and
FIG. 13 is a second structural diagram of a terminal device according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments obtained by a person of ordinary skill in the art based on the embodiments of this disclosure without creative efforts shall fall within the protection scope of this disclosure.

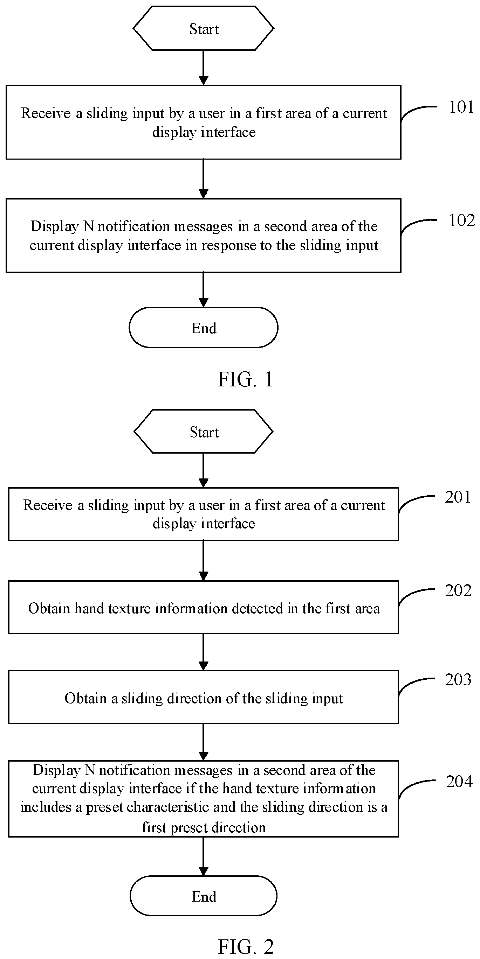

FIG. 1 is a flowchart of a method for displaying a notification message according to an embodiment of this disclosure. As shown in FIG. 1, the method includes the following steps.

Step 101: Receive a sliding input by a user in a first area of a current display interface.

The current display interface may be any display interface, for example, a screen desktop, or a display interface of an application program. The first area of the current display interface may be any area in the current display interface. Specifically, a location frequently touched during one-handed operation may be set as the first area according to the user's operating habits; or the first area may be set according to the user's customized settings or according to a display status of the screen. For example, when the terminal device is in portrait display mode, the user usually holds the middle of the terminal device, and therefore the middle area may be set as the first area to facilitate the user's operation. The above-mentioned sliding input may be a sliding operation performed by the user in the first area.

In the related art, when the terminal device receives a notification message, the user needs to perform a pull-down operation from the top of the screen to trigger the terminal device to display the notification message. In this step, the user may perform the sliding operation, that is, the sliding input, in the first area of the current display interface, which is convenient for the user to operate with one hand.

Step 102: Display N notification messages in a second area of the current display interface in response to the sliding input.

The second area is an area with the shortest distance to the first area being less than a preset threshold, and N is a positive integer.

The notification messages may be messages, such as instant messaging information and short messages, sent by other terminals and received by the terminal device; or may be reminder messages from application programs in the terminal device, such as calendar reminder messages and weather forecast notification messages.

The second area may be an area close to the first area, that is, the shortest distance between the second area and the first area is less than the preset threshold. Because the first area is a convenient area for the user to operate, and the second area is relatively close to the first area, when the user operates with one hand, it is convenient for the user to further operate the notification message in the second area to view specific content of the notification message. Further, the second area may be an area close to a location of the sliding input by the user, so that it is convenient for the user to operate in both the first area and the second area. For example, the bottom area or the side area of the screen is set as the second area, and it is convenient for the user to operate the screen while holding the terminal device with one hand.

In addition, the N notification messages may be displayed in a preset manner, for example, displayed in reverse order of receiving times or displayed in descending order of priorities of the application programs.

In this embodiment of this disclosure, the foregoing method for displaying a notification message may be applied to a terminal device, for example, a mobile phone, a tablet computer (Tablet Personal Computer), a laptop computer (Laptop Computer), a personal digital assistant (personal digital assistant, PDA), a mobile Internet device (Mobile Internet Device, MID), or a wearable device (Wearable Device).

According to the method for displaying a notification message in this embodiment of this disclosure, the sliding input by the user in the first area of the current display interface is received; and the N notification messages are displayed in the second area of the current display interface in response to the sliding input; where the second area is an area with the shortest distance to the first area being less than the preset threshold, and N is a positive integer. In this way, when the user operates the terminal device with one hand, the user can operate in an area that is convenient for finger operation, to trigger the terminal device to display the notification message, which is convenient for the user to call up display of the notification message and perform subsequent operations on the notification message with one hand.

Referring to FIG. 2, a main difference of this embodiment from the foregoing embodiment lies in that, the N notification messages are displayed in the second area of the current display interface if hand texture information includes a preset characteristic and a sliding direction is a first preset direction.

FIG. 2 is a flowchart of a method for displaying a notification message according to an embodiment of this disclosure. As shown in FIG. 2, the method includes the following steps.

Step 201: Receive a sliding input by a user in a first area of a current display interface.

For an implementation of this step, refer to the description in step 101. To avoid repetition, details are not described herein again.

Step 202: Obtain hand texture information detected in the first area.

The hand texture information may include texture information of a knuckle at the base of a finger or the palm or other parts, and may be specifically the direction of the texture, characteristics of distribution of the texture, and the like. When operating with one hand, the user performs the sliding input with a finger, and the base of the hand may touch the screen, so that the hand texture information detected by the screen can be obtained. In this step, a fingerprint acquisition module may be integrated into the screen of the terminal device, to acquire the hand texture information of the user.

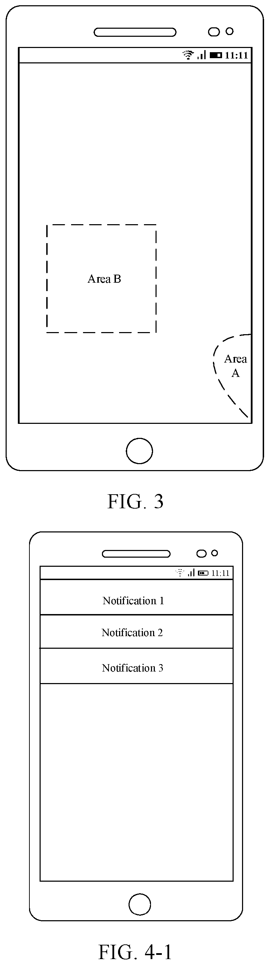

The first area may include an area in which the user's finger slides, and a location easily accessible by the base of the finger or the palm of the user. For example, the first area has two subareas: an area A and an area B, as shown in FIG. 3. The user performs the sliding input in the area B, and the terminal device obtains the texture information of the base of the finger detected in the area A.

Step 203: Obtain a sliding direction of the sliding input.

In this step, when the user performs the sliding operation in the first area, the sliding direction of the sliding operation is obtained, that is, the direction from the sliding start point to the sliding end point. For example, the sliding direction is from top to bottom.

It should be noted that in this embodiment, a sequence of performing step 202 and step 203 is not limited.

Step 204: Display N notification messages in a second area of the current display interface if the hand texture information includes a preset characteristic and the sliding direction is a first preset direction.

The second area is an area with the shortest distance to the first area being less than a preset threshold, and N is a positive integer.

For the related explanations of the second area and the notification message, refer to the description in step 102.

The preset characteristic may be a texture characteristic of the base of the finger, and the terminal device may preset a texture characteristic of the hand according to the texture characteristic of the base of the finger. The first preset direction may be a direction convenient for user operation, for example, from top to bottom or from bottom to top. If the hand texture information includes the texture characteristic of the base of the finger, and the sliding operation is the first preset direction, it matches the characteristics of one-handed operation, and the N notification messages may be displayed in the second area. Because the second area is close to the first area, it is convenient for the user to operate the notification messages.

Optionally, the hand texture information includes a finger knuckle print and/or a palm print; and the preset characteristic includes at least one of the following: at least two texture lines whose spacing is greater than a preset spacing value are included, the length of the texture line is different, a curvature of the texture line is less than a preset curvature value, and the thickness of the texture line is greater than a preset value.

In this implementation, the hand texture information may include a finger knuckle print or a palm print or both. The terminal device may preset characteristics of the finger knuckle print and palm print to distinguish from other textures. For example, a spacing between texture lines is greater than a preset spacing value, a curvature of the texture line is less than a preset curvature value, the length of the texture line is different, and the texture line is relatively thick, that is, the thickness of the texture line is greater than a preset value. Specifically, one or more of the above-mentioned characteristics may be used as the preset characteristic.

The finger knuckle and the palm of the user may touch the screen when the user is operating with one hand. Therefore, when the above preset characteristics are detected, it is determined that the user is operating with one hand, and the notification messages are displayed in an area that is convenient for the user to operate, making it more convenient for the user to operate the notification messages and improving accuracy of determining an operation manner of the user.

Optionally, N is greater than 1, and the displaying N notification messages in a second area of the current display interface includes: sorting the N notification messages according to a receiving time of each of the N notification messages, and displaying the sorted N notification messages in the second area of the current display interface.

The terminal device may monitor a receiving time of each notification message, and sort the N notification messages based on the order of the receiving times. A sorting manner may be preset by the terminal or preset according to the user's operation.

For example, the N notification messages are displayed in the second area in reverse order of the receiving times, and in the second area, a notification message displayed closer to the first area has been received later, which is convenient for the user to operate and view a notification message that has been most recently received. For another example, the N notification messages are sorted in reverse order of the receiving times, and displayed at the bottom of the screen, that is, in the second area, and a notification message closer to the bottom of the screen has been received later.

In addition, the N notification messages may also be sorted in order of the receiving times, and notification messages that have been received later are obtained, that is, notification messages within a preset range are sorted and displayed in the second area of the current display interface. The notification messages that have been received later usually cannot be read by the user in time, and therefore the notification messages that have been received later are displayed in the second area of the current display interface, which is convenient for the user to operate and view the notification message that has been most recently received.

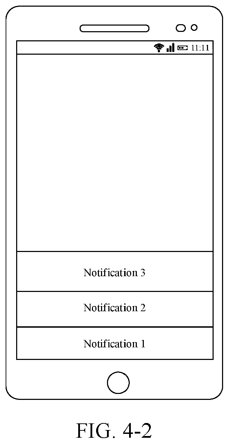

For example, the terminal device receives three notification messages, which are arranged, in order of receiving times, as notification 3, notification 2, and notification 1 in sequence. As shown in FIG. 4-1, in the related art, after the notification messages are received, the notification messages are displayed in the manner shown in FIG. 4-1, that is, a notification message that has been received later is displayed near the top, and a notification message that has been received earlier is displayed away from the top. However, in this embodiment of this disclosure, the terminal device obtains receiving times of the notification messages, arranges them in order of the receiving times, and displays the notification messages at the bottom of the screen, that is, in the second area. In addition, notification 1 in the notification messages that has been received latest is displayed near the bottom of the screen, and notification 3 that has been received earliest is displayed away from the bottom. The three notification messages are displayed according to the receiving times, as shown in FIG. 4-2. In this way, it is convenient for the user to operate and view the notification message that has been most recently received.

In an actual application scenario, after the N notification messages arranged in the preset sorting manner are displayed, the user may operate in the second area to switch the sorting manner of the N notification messages. For example, in the second area, the terminal displays the notification messages from top to bottom in order of the receiving times of the notification messages. If a pressing operation of the user in the second area is received, the sorting manner may be switched to displaying from bottom to top. It can improve flexibility of displaying the notification messages and make it more convenient for the user to operate the notification messages.

According to this implementation, it is convenient for the user to obtain the notification messages according to the receiving times, and operate and view the notification messages. For example, the notification message that has been received earliest or latest can be viewed quickly.

It should be noted that this implementation can be applied to any embodiment of this disclosure, with the same beneficial effects achieved.

To further understand this embodiment, the following describes examples with reference to specific embodiments.

As shown in FIG. 3, the terminal device presets an area A and an area B, and sets fingerprint characteristics corresponding to the area A and sliding operation characteristics corresponding to the area B.

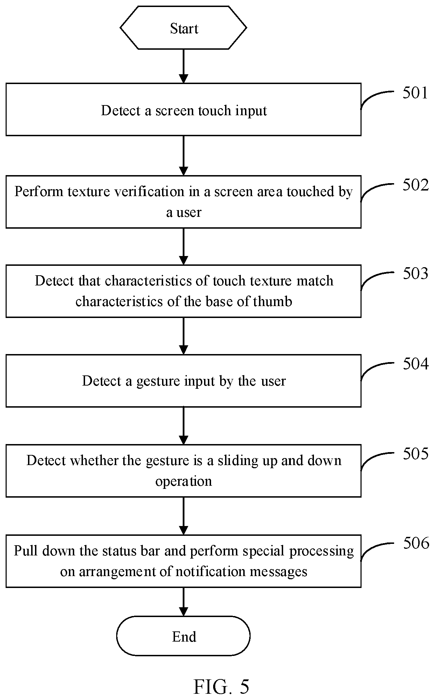

As shown in FIG. 5, the method for displaying a notification message includes the following steps:

Step 501: Detect a screen touch input.

In this step, the terminal device detects a touch input in the area A.

Step 502: Perform texture verification in a screen area touched by the user.

In this step, the terminal device detects characteristics of fingerprint texture in the area A through the screen.

Step 503: Detect that characteristics of touch texture match characteristics of the base of thumb.

The terminal device prestores the texture characteristics of the base of thumb. In this step, the acquired texture is compared with the prestored texture characteristics of the base of thumb. If the acquired texture characteristics match the texture characteristics of the base of thumb, an operation of the user on the screen continues to be detected. If the acquired texture characteristics do not match the texture characteristics of the base of thumb, the process can be ended, or an operation of the user in the area B is to be detected.

Step 504: Detect a gesture input by the user.

In this step, the operation by the user in the area B is detected.

Step 505: Detect whether the gesture is a sliding up and down operation.

Whether the operation of the user is a sliding up and down operation is detected.

Step 506: Pull down the status bar and perform special processing on arrangement of notification messages.

When the sliding operation is performed in the preset sliding direction, the status bar is pulled down to the bottom of the display screen, and the notification messages are arranged from the bottom of the screen to the top of the screen in reverse order of the receiving times of the notification messages. That is, a notification message that has been received later is displayed near the bottom.

In this way, it is convenient for the user to view the latest message and edit the latest message. According to the method for displaying a notification message in this embodiment of this disclosure, the N notification messages are displayed in the second area of the current display interface if the hand texture information includes the preset characteristic and the sliding direction is the first preset direction. In this way, the terminal can determine the one-handed operation manner of the user according to the acquired texture characteristics, thereby displaying the notification messages in an area close to the operation location of the user according to the operation manner of the user, which is convenient for the user to operate and view the notification messages.

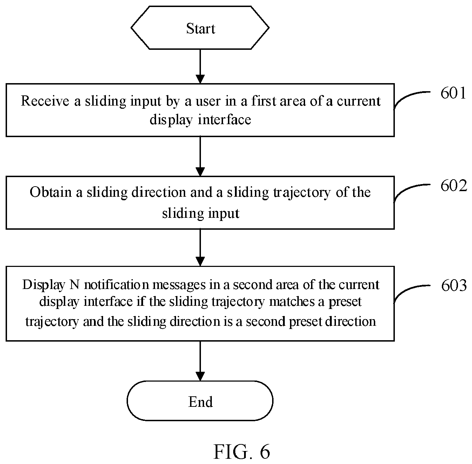

Referring to FIG. 6, a main difference of this embodiment from the foregoing embodiment lies in that, the N notification messages are displayed in the second area of the current display interface if a sliding trajectory matches a preset trajectory and a sliding direction is a second preset direction.

FIG. 6 is a flowchart of a method for displaying a notification message according to an embodiment of this disclosure. As shown in FIG. 6, the method includes the following steps.

Step 601: Receive a sliding input by a user in a first area of a current display interface.

For an implementation of this step, refer to the description in step 101. To avoid repetition, details are not described herein again.

Step 602: Obtain a sliding direction and a sliding trajectory of the sliding input.

The sliding direction of the sliding operation may be understood as the direction from the sliding start point to the sliding end point, which may be specifically a straight line from top to bottom, or may be a direction along a curve. The sliding trajectory may be a trajectory on the screen of the sliding operation corresponding to the sliding input.

Step 603: Display N notification messages in a second area of the current display interface if the sliding trajectory matches a preset trajectory and the sliding direction is a second preset direction.

The second area is an area with the shortest distance to the first area being less than a preset threshold, and N is a positive integer.

For the related explanations of the second area and displaying the N notification messages, refer to the description in step 102.

Before this step, the terminal device may preset a range of sliding trajectories convenient for the user to operate with one hand. For example, a range of arc trajectories from the side of the screen to the bottom of the screen may be set for the sliding trajectory. If the detected sliding trajectory is within the preset trajectory range, it indicates that the sliding trajectory matches the preset trajectory. The second preset direction may also be a direction preset by the terminal device, and the direction may be specifically a straight line from top to bottom, or may be a direction along a curve.

The notification messages are displayed in the second area of the current display interface if the sliding trajectory of the sliding operation matches the preset trajectory and the sliding direction is the second preset direction.

To further understand the solution of this embodiment, the following describes an example.

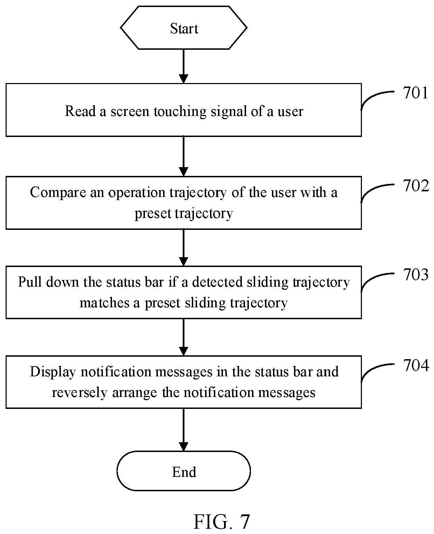

As shown in FIG. 7, the method for displaying a notification message includes the following steps.

Step 701: Read a screen touching signal of a user.

In this step, the terminal device detects a touch operation on the screen and identifies a trajectory formed by the operation by the user on the screen.

Step 702: Compare an operation trajectory of the user with a preset trajectory.

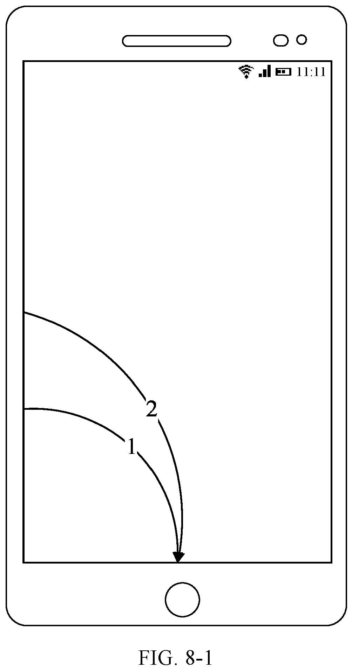

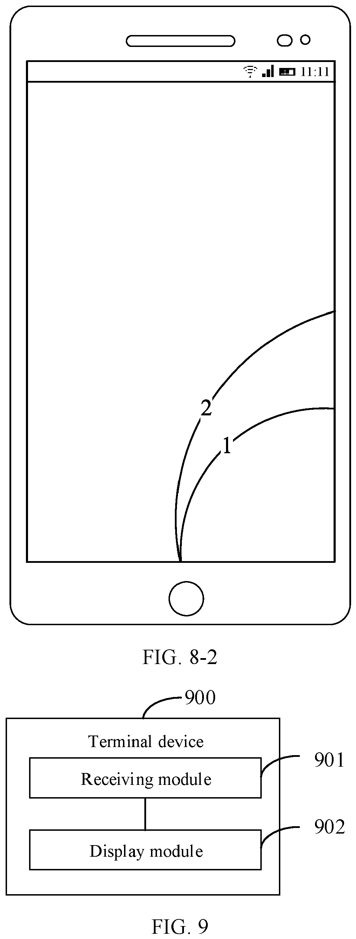

The terminal device prestores a sliding trajectory from the side of the screen to the bottom of the screen. For example, an arc sliding trajectory from the left side of the screen to the bottom of the screen may be preset, such as a sliding trajectory 1 or a sliding trajectory 2 shown in FIG. 8-1. Alternatively, an arc sliding trajectory from the right side of the screen to the bottom of the screen may be preset, such as a sliding trajectory 1 or a sliding trajectory 2 shown in FIG. 8-2.

In this step, the detected sliding trajectory is compared with the preset trajectory.

Step 703: Pull down the status bar if a detected sliding trajectory matches a preset sliding trajectory.

Step 704: Display notification messages in the status bar and reversely arrange the notification messages.

In this step, according to a receiving time of a notification message, a notification message that has been received later is displayed near the bottom of the screen, which is convenient for the user to operate at the bottom, for example, tap to view or slide to delete.

In this embodiment of this disclosure, the terminal device may operate and set a specific sliding trajectory in advance with reference to the side and bottom of the screen, which is convenient for the user to view the notification messages when the user operates with one hand. The notification messages are sorted and displayed according to the receiving times of the notification messages, which is convenient for the user to operate and view a newly received notification message.

Referring to FIG. 9, FIG. 9 is a structural diagram of a terminal device according to an embodiment of this disclosure. As shown in FIG. 9, the terminal device 900 includes:
a receiving module 901, configured to receive a sliding input by a user in a first area of a current display interface; and
a display module 902, configured to display N notification messages in a second area of the current display interface in response to the sliding input;
where the second area is an area with the shortest distance to the first area being less than a preset threshold, and N is a positive integer.

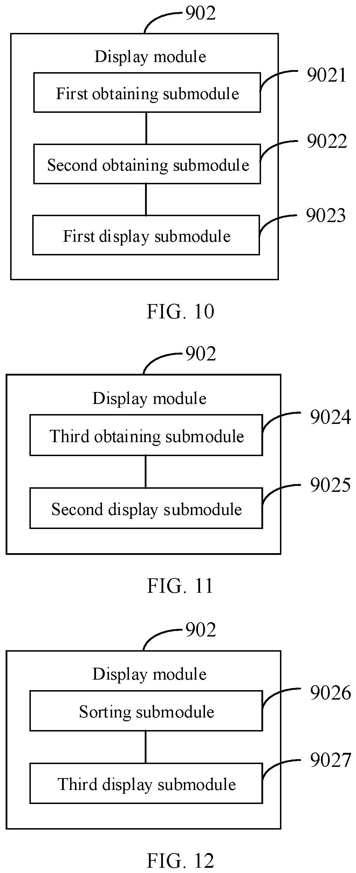

Optionally, as shown in FIG. 10, the display module 902 includes:
a first obtaining submodule 9021, configured to obtain hand texture information detected in the first area;
a second obtaining submodule 9022, configured to obtain a sliding direction of the sliding input; and
a first display submodule 9023, configured to display the N notification messages in the second area of the current display interface if the hand texture information includes a preset characteristic and the sliding direction is a first preset direction.

Optionally, the hand texture information includes a finger knuckle print and/or a palm print; and
the preset characteristic includes at least one of the following: at least two texture lines whose spacing is greater than a preset spacing value are included, the length of the texture line is different, a curvature of the texture line is less than a preset curvature value, and the thickness of the texture line is greater than a preset value.

Optionally, as shown in FIG. 11, the display module 902 includes:
a third obtaining submodule 9024, configured to obtain a sliding direction and a sliding trajectory of the sliding input; and
a second display submodule 9025, configured to display the N notification messages in the second area of the current display interface if the sliding trajectory matches a preset trajectory and the sliding direction is a second preset direction.

Optionally, N is greater than 1, and as shown in FIG. 12, the display module 902 includes:
a sorting submodule 9026, configured to sort the N notification messages according to a receiving time of each of the N notification messages; and
a third display submodule 9027, configured to display the sorted N notification messages in the second area of the current display interface.

The terminal device 900 can implement each process implemented by the terminal device in the foregoing method embodiments. To avoid repetition, details are not described herein again.

According to the terminal device 900 in this embodiment of this disclosure, when the user operates the terminal device with one hand, the user can operate in an area that is convenient for finger operation, to trigger the terminal device to display the notification message, which is convenient for the user to call up display of the notification message and perform subsequent operations on the notification message with one hand.

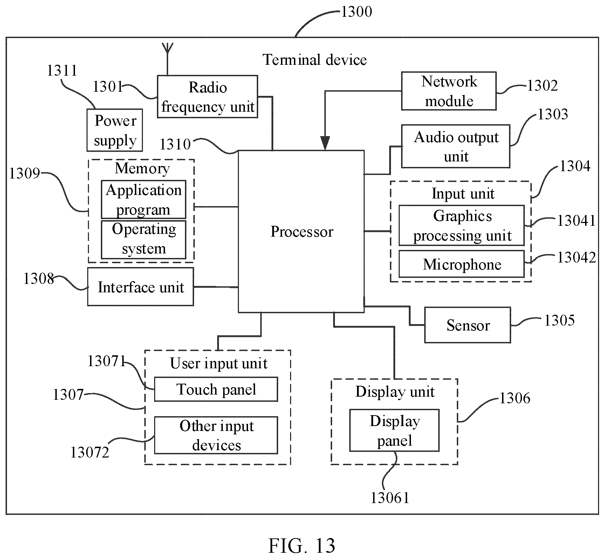

FIG. 13 is a schematic structural diagram of hardware implementing the terminal device in the embodiments of this disclosure. The terminal device 1300 includes but is not limited to: a radio frequency unit 1301, a network module 1302, an audio output unit 1303, an input unit 1304, a sensor 1305, a display unit 1306, a user input unit 1307, an interface unit 1308, a memory 1309, a processor 1310, a power supply 1311, and other components. A person skilled in the art may understand that the structure of the terminal device shown in FIG. 13 does not constitute a limitation to the terminal device. The terminal device may include more or fewer components than that shown in the figure, or a combination of some components, or an arrangement of different components. In this embodiment of this disclosure, the terminal device includes but is not limited to a mobile phone, a tablet computer, a laptop computer, a palmtop computer, a vehicle-mounted mobile terminal, a wearable device, a pedometer, or the like.

The user input unit 1307 receives a sliding input by a user in a first area of a current display interface; and the processor 1310 displays N notification messages in a second area of the current display interface in response to the sliding input; where the second area is an area with the shortest distance to the first area being less than the preset threshold, and N is a positive integer.

In this way, when the user operates the terminal device with one hand, the user can operate in an area that is convenient for finger operation, to trigger the terminal device to display the notification message, which is convenient for the user to call up display of the notification message and perform subsequent operations on the notification message with one hand.

Optionally, the processor 1310 is further configured to: obtain hand texture information detected in the first area; obtain a sliding direction of the sliding input; and display the N notification messages in the second area of the current display interface if the hand texture information includes a preset characteristic and the sliding direction is a first preset direction.

Optionally, the hand texture information includes a finger knuckle print and/or a palm print; and the preset characteristic includes at least one of the following: at least two texture lines whose spacing is greater than a preset spacing value are included, the length of the texture line is different, a curvature of the texture line is less than a preset curvature value, and the thickness of the texture line is greater than a preset value.

Optionally, the processor 1310 is further configured to obtain a sliding direction and a sliding trajectory of the sliding input; and display the N notification messages in the second area of the current display interface if the sliding trajectory matches a preset trajectory and the sliding direction is a second preset direction.

Optionally, N is greater than 1, and the processor 1301 is further configured to: sort the N notification messages according to a receiving time of each of the N notification messages, and display the sorted N notification messages in the second area of the current display interface.

It should be understood that in this embodiment of this disclosure, the radio frequency unit 1301 may be configured to receive and send signals in an information reception or transmission or a call process. Specifically, after receiving downlink data from a base station, the radio frequency unit 1301 sends the downlink data to the processor 1310 for processing, and in addition, sends uplink data to the base station. Generally, the radio frequency unit 1301 includes but is not limited to an antenna, at least one amplifier, a transceiver, a coupler, a low noise amplifier, and a duplexer. In addition, the radio frequency unit 1301 may further communicate with a network and another device through a wireless communications system.

The terminal device provides a user with wireless broadband Internet access through the network module 1302, for example, helps the user send and receive emails, browse web pages, and access streaming media.

The audio output unit 1303 can convert audio data received by the radio frequency unit 1301 or the network module 1302 or stored in the memory 1309 into an audio signal, and output the audio signal into sound. In addition, the audio output unit 1303 may further provide audio output (for example, call signal receiving sound or message receiving sound) related to a specific function performed by the terminal 1300. The audio output unit 1303 includes a speaker, a buzzer, a telephone receiver, and the like.

The input unit 1304 is configured to receive an audio signal or a video signal. The input unit 1304 may include a graphics processing unit (Graphics Processing Unit, GPU) 13041 and a microphone 13042. The graphics processing unit 13041 is configured to process image data of a still picture or a video obtained by an image capture apparatus (for example, a camera) in video capture mode or image capture mode. A processed image frame can be displayed on the display unit 1306. The image frames processed by the GPU 13041 can be stored in the memory 1309 (or another storage medium) or sent by the radio frequency unit 1301 or the network module 1302. The microphone 13042 may receive sound and can process the sound into audio data. The processed audio data can be converted into a format that can be sent to a mobile communications base station through the radio frequency unit 1301 in a telephone call mode, for outputting.

The terminal device 1300 further includes at least one sensor 1305, for example, an optical sensor, a motion sensor, and other sensors. Specifically, the optical sensor includes an ambient light sensor and a proximity sensor. The ambient light sensor may adjust luminance of the display panel 13061 based on brightness of ambient light. The proximity sensor may turn off the display panel 13061 and/or backlight when the terminal device 1300 approaches an ear. As a type of motion sensor, an accelerometer sensor can detect accelerations in all directions (generally three axes), and can detect the magnitude and direction of gravity when it is still. The accelerometer sensor may be configured to identify a posture (for example, switching between a landscape mode and a portrait mode, related games, and magnetometer posture calibration) of a terminal device, perform vibration identification-related functions (for example, a pedometer and a knock), and the like. The sensor 1305 may further include a fingerprint sensor, a pressure sensor, an iris sensor, a molecular sensor, a gyroscope, a barometer, a hygrometer, a thermometer, an infrared sensor, and the like. Details are not described herein again.

The display unit 1306 is configured to display information input by a user or information provided to a user. The display unit 1306 may include the display panel 13061, and the display panel 13061 may be configured in a form of a liquid crystal display (Liquid Crystal Display, LCD), an organic light-emitting diode (Organic Light-Emitting Diode, OLED), or the like.

The user input unit 1307 may be configured to receive entered digit or character information and generate a key signal input related to user setting and function control of the terminal device. Specifically, the user input unit 1307 includes a touch panel 13071 and other input devices 13072. The touch panel 13071, also referred to as a touchscreen, may capture a touch operation performed by a user on or near the touch panel (for example, an operation performed by the user on the touch panel 13071 or near the touch panel 13071 by using any appropriate object or accessory such as a finger or a stylus). The touch panel 13071 may include two parts: a touch detection apparatus and a touch controller. The touch detection apparatus detects a touch location of the user, detects a signal carried by a touch operation, and transmits the signal to the touch controller. The touch controller receives touch information from the touch detection apparatus, converts the touch information to point coordinates, and sends the point coordinates to the processor 1310, and receives and executes a command sent by the processor 1310. In addition, the touch panel 13071 may be implemented in various types such as resistive, capacitive, infrared, and surface acoustic wave. In addition to the touch panel 13071, the user input unit 1307 may further include the another input device 13072. Specifically, the another input device 13072 may include but is not limited to a physical keyboard, function keys (such as a volume control key and a switch key), a trackball, a mouse, and a joystick. Details are not described herein.

Further, the touch panel 13071 can cover the display panel 13061. When detecting a touch operation on or near the touch panel 13071, the touch panel 13071 transmits the touch operation to the processor 1310 to determine a type of a touch event. Then the processor 1310 provides corresponding visual output on the display panel 13061 based on the type of the touch event. Although in FIG. 13, the touch panel 13071 and the display panel 13061 are configured as two independent components to implement input and output functions of the terminal device, in some embodiments, the touch panel 13071 and the display panel 13061 can be integrated to implement the input and output functions of the terminal device. Details are not limited herein.

The interface unit 1308 is an interface for connecting an external apparatus to the terminal device 1300. For example, the external apparatus may include a wired or wireless headset port, an external power supply (or a battery charger) port, a wired or wireless data port, a memory card port, a port for connecting an apparatus having an identification module, an audio input/output (I/O) port, a video I/O port, a headset port, and the like. The interface unit 1308 may be configured to receive input (for example, data information and electric power) from the external apparatus, and transmit the received input to one or more elements in the terminal device 1300; or may be configured to transmit data between the terminal 1300 and the external apparatus.

The memory 1309 may be configured to store a software program and various data. The memory 1309 may mainly include a program storage area and a data storage area. The program storage area may store an operating system, an application program required by at least one function (such as a sound play function or an image play function), and the like. The data storage area may store data (such as audio data or an address book) or the like created based on use of the mobile phone. In addition, the memory 1309 may include a high-speed random access memory, or may include a non-volatile memory, for example, at least one magnetic disk storage device, a flash memory device, or other volatile solid-state storage devices.

The processor 1310 is a control center of the terminal. The processor 1310 uses various interfaces and lines to connect the various parts of the entire terminal device, and performs various functions of the terminal device and processes data by running or executing software programs and/or modules stored in the memory 1309 and invoking data stored in the memory 1309, to monitor the terminal device as a whole. The processor 1310 may include one or more processing units. Optionally, the processor 1310 may integrate an application processor and a modem processor. The application processor mainly deals with an operating system, a user interface, and an application program. The modem processor mainly deals with wireless communication. It can be understood that alternatively, the modem processor may not be integrated into the processor 1310.

The terminal device 1300 may further include the power supply 1311 (such as a battery) supplying power to each component. Preferably, the power supply 1311 may be logically connected to the processor 1310 by using a power management system, so as to implement functions such as charging management, discharging management and power consumption management by using the power management system.

In addition, the terminal device 1300 includes some functional modules that are not illustrated. Details are not described herein.

Preferably, an embodiment of this disclosure further provides a terminal device, including the processor 1310, the memory 1309, and a computer program stored in the memory 1309 and capable of running on the processor 1310. When the computer program is executed by the processor 1310, the processes of the foregoing embodiments of the method for displaying a notification message are implemented, with the same technical effects achieved. To avoid repetition, details are not described herein again.

An embodiment of this disclosure further provides a computer-readable storage medium, where the computer-readable storage medium stores a computer program. When the computer program is executed by a processor, the processes of the foregoing embodiments of the method for displaying a notification message are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It should be noted that in this specification, the terms "comprise", "include" and any other variants thereof are intended to cover non-exclusive inclusion, so that a process, a method, an article, or an apparatus that includes a series of elements not only includes these very elements, but may also include other elements not expressly listed, or also include elements inherent to this process, method, article, or apparatus. Without being subject to further limitations, an element defined by a phrase "including a ......" does not exclude presence of other identical elements in the process, method, article, or apparatus that includes the very element.

Based on the foregoing descriptions of the implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present disclosure essentially, or the part contributing to the related technologies may be implemented in a form of a software product. The computer software product is stored in a storage medium (for example, a ROM/RAM, a magnetic disk, or a compact disc), and includes a plurality of instructions for instructing a terminal device (which may be a mobile phone, a computer, a server, an air conditioner, a network device, or the like) to perform the method described in the embodiments of this disclosure.

The embodiments of this disclosure are described above with reference to the accompanying drawings, but this disclosure is not limited to the foregoing implementations. The foregoing implementations are only illustrative rather than restrictive. Inspired by this disclosure, a person of ordinary skill in the art can still derive many variations without departing from the essence of this disclosure and the protection scope of the claims. All these variations shall fall within the protection of this disclosure.

## Claims

1. A method for displaying a notification message, comprising:
receiving a sliding input by a user in a first area of a current display interface; and
displaying N notification messages in a second area of the current display interface in response to the sliding input;
wherein the second area is an area with the shortest distance to the first area being less than a preset threshold, and N is a positive integer.

2. The method according to claim 1, wherein the displaying N notification messages in a second area of the current display interface in response to the sliding input comprises:
obtaining hand texture information detected in the first area;
obtaining a sliding direction of the sliding input; and
displaying the N notification messages in the second area of the current display interface if the hand texture information comprises a preset characteristic and the sliding direction is a first preset direction.

3. The method according to claim 2, wherein the hand texture information comprises a finger knuckle print and/or a palm print; and
the preset characteristic comprises at least one of the following: at least two texture lines whose spacing is greater than a preset spacing value are comprised, the length of the texture line is different, a curvature of the texture line is less than a preset curvature value, and the thickness of the texture line is greater than a preset value.

4. The method according to claim 1, wherein the displaying N notification messages in a second area of the current display interface in response to the sliding input comprises:
obtaining a sliding direction and a sliding trajectory of the sliding input; and
displaying the N notification messages in the second area of the current display interface if the sliding trajectory matches a preset trajectory and the sliding direction is a second preset direction.

5. The method according to any one of claims 1 to 4, wherein N is greater than 1, and
the displaying N notification messages in a second area of the current display interface comprises:
sorting the N notification messages according to a receiving time of each of the N notification messages; and
displaying the sorted N notification messages in the second area of the current display interface.

6. A terminal device, comprising:
a receiving module, configured to receive a sliding input by a user in a first area of a current display interface; and
a display module, configured to display N notification messages in a second area of the current display interface in response to the sliding input;
wherein the second area is an area with the shortest distance to the first area being less than a preset threshold, and N is a positive integer.

7. The terminal device according to claim 6, wherein the display module comprises:
a first obtaining submodule, configured to obtain hand texture information detected in the first area;
a second obtaining submodule, configured to obtain a sliding direction of the sliding input; and
a first display submodule, configured to display the N notification messages in the second area of the current display interface if the hand texture information comprises a preset characteristic and the sliding direction is a first preset direction.

8. The terminal device according to claim 7, wherein the hand texture information comprises a finger knuckle print and/or a palm print; and
the preset characteristic comprises at least one of the following: at least two texture lines whose spacing is greater than a preset spacing value are comprised, the length of the texture line is different, a curvature of the texture line is less than a preset curvature value, and the thickness of the texture line is greater than a preset value.

9. The terminal device according to claim 6, wherein the display module comprises:
a third obtaining submodule, configured to obtain a sliding direction and a sliding trajectory of the sliding input; and
a second display submodule, configured to display the N notification messages in the second area of the current display interface if the sliding trajectory matches a preset trajectory and the sliding direction is a second preset direction.

10. The terminal device according to any one of claims 6 to 9, wherein N is greater than 1, and the display module comprises:
a sorting submodule, configured to sort the N notification messages according to a receiving time of each of the N notification messages; and
a third display submodule, configured to display the sorted N notification messages in the second area of the current display interface.

11. A terminal device, comprising: a memory, a processor, and a computer program stored in the memory and capable of running on the processor, wherein when the computer program is executed by the processor, the steps of the method for displaying a notification message according to any one of claims 1 to 5 are implemented.

12. A computer-readable storage medium, storing a computer program, wherein when the computer program is executed by a processor, the steps of the method for displaying a notification message according to any one of claims 1 to 5 are implemented.
